(19) **Europäisches Patentamt**

**European Patent Office**

**Office européen des brevets**

(11) **EP 1 300 321 B1**

(12) **FASCICULE DE BREVET EUROPEEN**

(45) Date de publication et mention
de la délivrance du brevet:
**14.12.2005 Bulletin 2005/50**

(51) Int Cl.⁷: **B62D 6/00**
// B62D101:00, B62D113:00,
B62D117:00, B62D153:00

(21) Numéro de dépôt: **02356193.9**

(22) Date de dépôt: **02.10.2002**

(54) **Procédé de contrôle de la fonction d'amortissement, pour direction assistée électrique de véhicule automobile**

Vorrichtung zur Regelung einer Dämpfungsfunktion für eine elektrische Kraftfahrzeugservolenkung

Process for controlling a damping function for an electric power steering for a motor vehicle

(84) Etats contractants désignés:
**DE ES GB IT SE**

(30) Priorité: **03.10.2001 FR 0112728**

(43) Date de publication de la demande:
**09.04.2003 Bulletin 2003/15**

(73) Titulaire: **Société de Mécanique d'Irigny**
**69540 Irigny (FR)**

(72) Inventeurs:
• **Rousseau, Bertrand**
**69008 Lyon (FR)**

• **Peltier, Hervé**
**69440 Saint Maurice sur Dargoire (FR)**

(74) Mandataire: **Bratel, Gérard et al**
**Cabinet Germain & Maureau,**
**12 rue Boileau**
**69006 Lyon Cedex (FR)**

(56) Documents cités:
**EP-A- 0 416 263**

**Description**

La présente invention concerne, de façon générale, les véhicules automobiles équipés d'une direction assistée, en particulier d'une direction assistée de type électrique. Elle se rapporte, plus particulièrement, à un procédé de contrôle de la fonction d'amortissement, aussi désignée comme "pendulage" ou "damping", pour ce type de direction assistée.

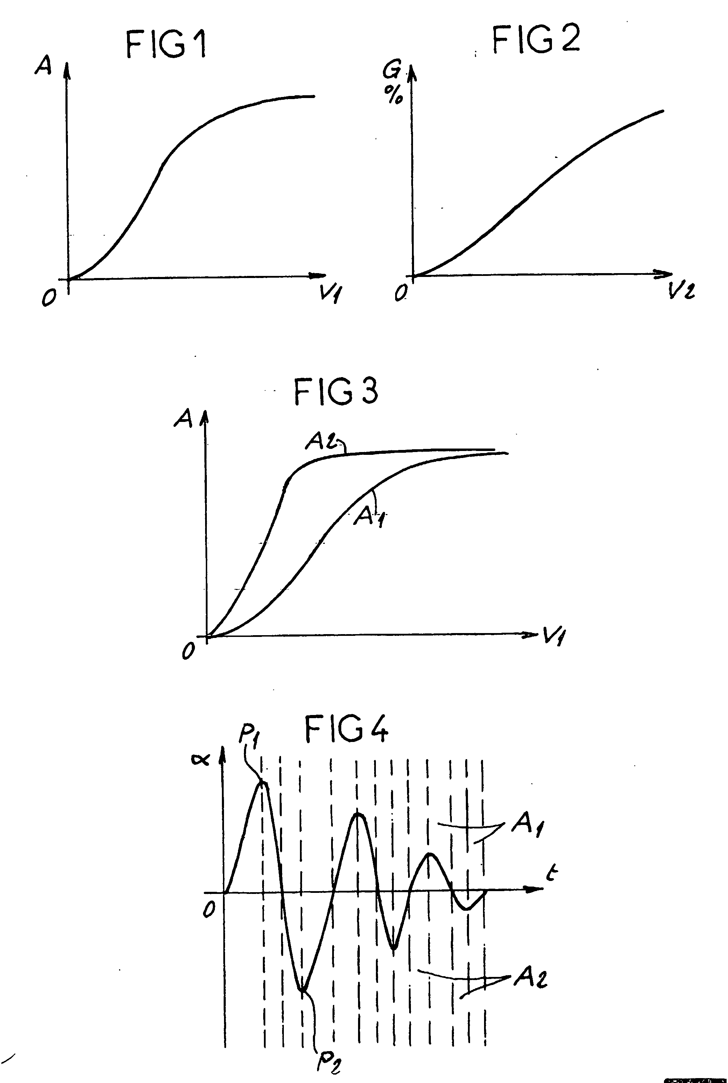

Actuellement, le processus de contrôle de la fonction d'amortissement, dans une direction assistée électrique, résulte de la combinaison de deux lois, illustrées par des courbes des figures 1 et 2 du dessin schématique annexé :

La première loi (figure 1) donne une valeur de base A du courant électrique de commande de l'amortissement, en fonction de la vitesse angulaire de rotation V1 du volant de direction. La seconde loi (figure 2) fournit une valeur de gain G (exprimée par exemple en pourcentage) à appliquer, en fonction de la vitesse instantanée V2 du véhicule.

A partir de ces deux lois élémentaires, l'intensité I du courant de commande de l'amortissement est donnée par la formule : $I = A . G$ .

L'inconvénient de ce processus est qu'il conduit à appliquer le même effet d'amortissement, que l'on soit en train de ramener le volant vers son point "zéro" (position maintenant le véhicule dans une trajectoire rectiligne) ou que l'on soit en train d'éloigner le volant de son point "zéro", donc en train de braquer de plus en plus fort, à gauche ou à droite.

Or il est souhaitable que le volant puisse revenir assez rapidement vers son point "zéro", mais que son éloignement du point "zéro" soit freiné fortement.

Le fait de freiner fortement l'éloignement du volant relativement à son point "zéro" est automatiquement compensé par les lois d'assistance, dans le cas d'une rotation volontaire du volant (le volant étant tenu et manoeuvré par le conducteur du véhicule).

Toutefois, la situation plus critique qui intéresse la présente invention est un lâcher du volant par le conducteur du véhicule, pouvant avoir un effet plus ou moins violent.

Pour maîtriser ce phénomène, il faut contrôler le courant électrique de commande de l'amortissement en appliquant alternativement deux lois d'amortissement :

- Si le volant revient vers son point "zéro", c'est-à-dire lorsque les signes de l'angle du volant et de sa vitesse de rotation sont opposés, l'on applique une première valeur d'intensité I1, à partir d'une valeur de base A1 (selon la formule: $I = A1 . G$).
- Si le volant s'éloigne de son point "zéro", c'est-à-dire lorsque les signes de l'angle du volant et de sa vitesse de rotation sont les mêmes, l'on applique une seconde valeur d'intensité 12, plus élevée, à partir d'une valeur de base différente A2 (selon la formule : $I2 = A2 . G$).

Ceci est illustré par le diagramme de la figure 3, qui correspond à la figure 1 mais montre les deux courbes, correspondant respectivement aux paramètres A1 et A2, la courbe "A2" se situant au-dessus de la courbe "A1".

Il résulte, de ce qui précède, que l'on passe d'une loi d'amortissement à l'autre, à chaque passage du volant par son point "zéro", ce qui donne lieu à des à-coups non souhaitables dans la direction. Pour éviter ce phénomène indésirable, il convient d'envisager une transition progressive entre les deux lois d'amortissement. Ceci est expliqué plus en détail par le diagramme de la figure 4, qui montre l'évolution de l'angle α du volant en fonction du temps t, au cours d'un processus d'amortissement (après lâcher du volant).

En effet, lors des changements de sens de rotation, donc de signe, de la vitesse de rotation du volant (aux points tels que P1 et P2 de la courbe de la figure 4), la vitesse angulaire du volant est nulle et le courant de commande de l'amortissement est lui aussi nul, que l'on se réfère à la première loi (courbe "A1") ou à la seconde loi (courbe "A2").

Par contre, autour du point "zéro" du volant, c'est-à-dire pour des faibles valeurs de l'angle α, il faut passer des coefficients de la première loi à ceux de la seconde loi d'amortissement, lorsque l'angle du volant passe d'une valeur positive à une valeur négative, ou repasse d'une valeur négative à une valeur positive. C'est donc à chaque passage par le point "zéro" qu'il convient d'assurer une transition entre les deux lois d'amortissement, en effectuant un passage progressif des coefficients de la première loi aux coefficients de la seconde loi.

Le problème étant ainsi posé, la présente invention propose une solution pour le résoudre, d'une façon simple et adaptée, afin de réaliser une transition évitant les à-coups.

A cet effet, l'invention a pour objet un procédé de contrôle de la fonction d'amortissement, pour une direction assistée de type électrique, ce procédé consistant essentiellement :

- à appliquer une première loi d'amortissement, pour le contrôle du courant de commande de l'amortissement, définissant le paramètre de calcul de l'intensité de ce courant en fonction de la vitesse angulaire de rotation du volant de direction, lorsque le volant revient vers son point "zéro",
- à appliquer une seconde loi d'amortissement, pour le contrôle du courant de commande de l'amortissement, définissant le paramètre de calcul de l'intensité de ce courant en fonction de la vitesse angulaire de rotation du volant, lorsque le volant s'éloigne de son point "zéro",
- à déterminer aussi une valeur positive et une valeur négative de la position angulaire du volant, situées de part et d'autre de son point "zéro",

- à détecter les instants de passage du volant par les deux valeurs de position angulaire précitées, et
- pour les positions angulaires du volant situées entre ces deux valeurs, à appliquer une loi d'amortissement définissant toujours le paramètre précité, qui réalise une transition continue entre la première loi d'amortissement et la seconde loi d'amortissement.

Selon un mode de mise en oeuvre préféré du procédé objet de l'invention, la transition entre la première loi d'amortissement et la seconde loi d'amortissement est effectuée de façon linéaire, c'est-à-dire avec variation linéaire du paramètre précité, en fonction du temps et/ou de la position angulaire du volant, entre la valeur de ce paramètre déterminée par la première loi d'amortissement, et l'autre valeur de ce paramètre déterminée par la seconde loi d'amortissement.

Les deux valeurs de la position angulaire du volant, entre lesquelles est appliquée la loi de transition par exemple linéaire, peuvent posséder la même valeur absolue, l'une étant positive et l'autre négative. Ces deux valeurs angulaires ne sont pas nécessairement constantes ; deux valeurs angulaires ne sont pas nécessairement constantes ; avantageusement, elles varient en fonction de la vitesse angulaire de rotation du volant, notamment en étant prévues croissantes (en valeur absolue) avec la vitesse de rotation du volant.

De cette manière, en se référant de nouveau aux figures 1 et 3, le paramètre A entrant dans la détermination de l'intensité du courant de commande de l'amortissement varie progressivement de la valeur A1 à la valeur A2, son calcul étant toutefois constamment réactualisé en fonction de la vitesse de rotation du volant. De plus, le processus général de contrôle de la fonction d'amortissement, rappelé en introduction, est toujours appliqué, c'est-à-dire que la détermination finale du courant de commande de l'amortissement fait encore intervenir la vitesse du véhicule, par l'intermédiaire du gain G, seule la valeur du paramètre A étant déterminée différemment, dans certaines conditions.

L'invention sera mieux comprise à l'aide de la description qui suit, en référence au dessin schématique annexé illustrant, à titre d'exemple, un mode de mise en oeuvre de ce procédé de contrôle de la fonction d'amortissement, pour direction assistée électrique de véhicule automobile :

Figure 5 est un diagramme illustrant le procédé et, plus particulièrement, la transition entre les deux lois d'amortissement ;
Figure 6 est un diagramme illustrant la variation des valeurs angulaires particulières précitées, en fonction de la vitesse de rotation du volant ;

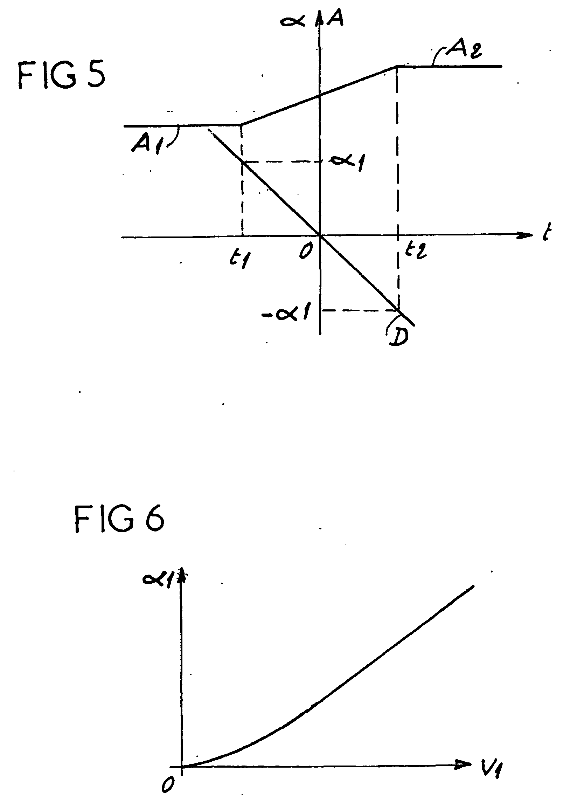

Figure 6 est un diagramme illustrant la variation des valeurs angulaires particulières précitées, en fonction de la vitesse de rotation du volant ;

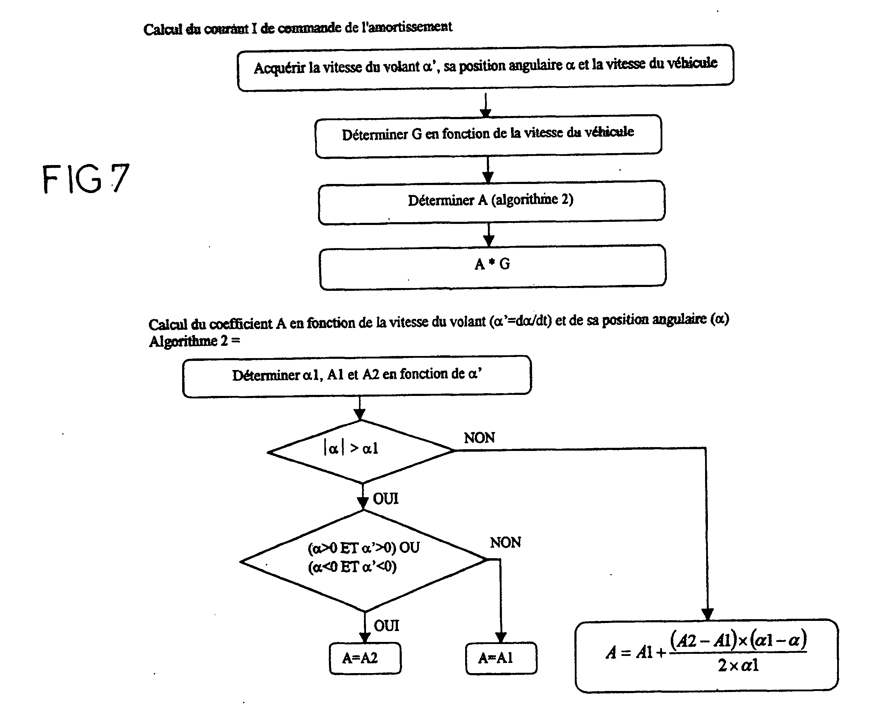

Figure 7 est un organigramme illustrant la détermination du courant de commande de l'amortissement.

Sur le diagramme de la figure 5, sont représentées en abscisses le temps t, et en ordonnées, d'une part, l'angle a du volant du véhicule concerné et, d'autre part, la paramètre A intervenant dans le calcul de l'intensité I du courant de commande de l'amortissement de la direction assisté électrique de ce véhicule (selon la formule : I = A. G).

Dans l'exemple ici considéré, on suppose que la rotation du volant, en particulier au voisinage de son passage au point "zéro", s'effectue à une vitesse angulaire constante. Ainsi, le volant s'approchant de son point "zéro", celui-ci passe à un instant t1 par une valeur angulaire positive $\alpha 1$, puis il franchit le point "zéro", "c'c et il passe à une instant ultérieur t2 par une valeur angulaire négative ($-\alpha 1$), en s'éloignant de son point "zéro", la variation de l'angle $\alpha$ en fonction du temps t étant représentée par une ligne droite D.

Pour la vitesse angulaire considérée de rotation du volant, le paramètre A prend la valeur constante A1, lorsque la valeur de l'angle $\alpha$ est encore supérieure à $\alpha 1$, c'est-à-dire avant l'instant t1. Le même paramètre A prend la valeur constante A2, supérieure à la valeur A1, lorsque la valeur de l'angle a est devenue inférieure à ($-\alpha 1$), c'est-à-dire après l'instant t2.

Entre les deux instants t1 et t2, donc au passage du point "zéro", le paramètre A croît de façon linéaire, en fonction du temps t (ou de l'angle $\alpha$), de la valeur A1 à la valeur A2, pour réaliser la transition voulue entre les deux lois d'amortissement. Plus précisément, si ($\alpha'$) désigne la dérivée de l'angle $\alpha$ par rapport au temps t, on a la relation :

$$A(\alpha') = A1\ (\alpha') + \frac{A2(\alpha')\text{-}A1(\alpha')}{2\alpha 1} \times (\alpha 1 \text{-} \alpha)$$

qui peut se simplifier en :

$$A = A1 + \frac{(A2\text{-}A1) \times (\alpha 1 \text{-} \alpha)}{2\alpha 1}$$

De plus, comme le montre la figure 6, l'angle al n'est pas choisi constant, mais il varie de façon croissante, en fonction de la vitesse angulaire de rotation Vl du volant.

Le processus global de détermination du courant de commande de l'amortissement, tenant compte de l'ensemble des paramètres précédents, est illustré par l'organigramme de la figure 7, dans lequel on distingue (en haut) l'algorithme général de calcul de l'intensité i de ce courant de commande, et en bas l'algorithme particulier de détermination du paramètre A, utilisant (pour la zone de transition) la dernière formule ci-dessus.

Les allures des diverses courbes indiquées ne sont que des exemples explicatifs, pouvant donner lieu, dans le détail, à diverses variantes et adaptations. Les moyens techniques de mise en oeuvre du procédé restent eux aussi très variables, sans que l'on s'éloigne du cadre de l'invention, telle que définie dans les revendications annexées.

**Revendications**

1. Procédé de contrôle de la fonction d'amortissement, pour une direction assistée électrique de véhicule automobile, **caractérisé en ce qu'**il consiste :

   ■ à appliquer une première loi d'amortissement, pour le contrôle du courant (I) de commande de l'amortissement, définissant le paramètre (A1) de calcul de l'intensité de ce courant en fonction de la vitesse angulaire de rotation (V1) du volant de direction, lorsque le volant revient vers son point "zéro",

   ■ à appliquer une seconde loi d'amortissement, pour le contrôle du courant (I) de commande de l'amortissement, définissant le paramètre (A2) de calcul de l'intensité de ce courant en fonction de la vitesse angulaire de rotation (V1) du volant de direction, lorsque le volant s'éloigne de son point "zéro",

   ■ à déterminer aussi une valeur positive ($\alpha$1) et une valeur négative (-$\alpha$1) de la position angulaire du volant, situées de part et d'autre de son point "zéro",

   ■ à détecter les instants (t1 ; t2) de passage du volant par les deux valeurs de position angulaire ($\alpha$1 ; -$\alpha$1) précitées, et

   ■ pour les positions angulaires (a) du volant situées entre ces deux valeurs ($\alpha$1 ; -$\alpha$1), à appliquer une loi d'amortissement, définissant toujours le paramètre (A) précité, qui réalise une transition continue entre la première loi d'amortissement et la seconde loi d'amortissement.

2. Procédé selon la revendication 1, **caractérisé en ce que** la transition entre la première loi d'amortissement et la seconde loi d'amortissement est effectuée de façon linéaire, c'est-à-dire avec variation linéaire du paramètre (A) précité, en fonction du temps (t) et/ou de la position angulaire ($\alpha$) du volant, entre la valeur (A1) de ce paramètre déterminée par la première loi d'amortissement, et l'autre valeur (A2) de ce paramètre déterminée par la seconde loi d'amortissement.

3. Procédé selon la revendication 1 ou 2, **caractérisé en ce que** les deux valeurs ($\alpha$1; -$\alpha$1) de la position angulaire du volant, entre lesquelles est appliquée la loi de transition, possèdent la même valeur absolue, l'une étant positive et l'autre négative.

4. Procédé selon l'une quelconque des revendications 1 à 3, **caractérisé en ce que** les deux valeurs angulaires ($\alpha$1 ; -$\alpha$1) de la position angulaire du volant, entre lesquelles est appliquée la loi de transition, varient en fonction de la vitesse angulaire de rotation (V1) du volant.

5. Procédé selon la revendication 4, **caractérisé en ce que** les deux valeurs ($\alpha$1 ; -$\alpha$1), de la position angulaire du volant, entre lesquelles est appliquée la loi de transition, sont croissantes en valeur absolue, avec la vitesse de rotation (V1) du volant.

**Patentansprüche**

1. Verfahren zum Steuern der Dämpfungsfunktion für eine elektrisch unterstützte Lenkung eines Kraftfahrzeugs,
   **dadurch gekennzeichnet,**
   **daß** es aus folgenden Schritten besteht:

   - es wird eine erste Dämpfungsvorschrift für die Steuerung des Stroms (I) zum Steuern der Dämpfung angewendet, welche den Parameter (A1) zum Berechnen der Stärke dieses Stroms in Abhängigkeit von der Drehwinkelgeschwindigkeit (V1) des Lenkrads definiert, wenn das Lenkrad zu seinem "Nullpunkt" zurückkehrt,

   - es wird eine zweite Dämpfungsvorschrift für die Steuerung des Stroms (I) zum Steuern der Dämpfung angewendet, welche den Parameter (A2) zum Berechnen der Stärke dieses Stroms in Abhängigkeit von der Drehwinkelgeschwindigkeit (V1) des Lenkrads definiert, wenn sich das Lenkrad von seinem "Nullpunkt" entfernt,

   - es werden ferner ein positiver Wert ($\alpha$1) und ein negativer Wert (-$\alpha$1) der Winkelposition des Lenkrads bestimmt, die zu beiden Seiten von seinem "Nullpunkt" liegen,

   - es werden die Zeitpunkte (tl; t2) des Durchgangs des Lenkrads mit Hilfe der beiden genannten Winkelpositionswerte ($\alpha$1; -$\alpha$1) erfaßt, und

   - es wird für die zwischen diesen beiden Werten ($\alpha$1; -$\alpha$1) liegenden Winkelpositionen (a) des Lenkrads eine Dämpfungsvorschrift angewendet, welche stets den genannten Parameter (A) definiert und die einen kontinuierlichen Übergang zwischen der ersten Dämpfungsvorschrift und der zweiten Dämpfungsvorschrift herstellt.

2. Verfahren nach Anspruch 1 ,
   **dadurch gekennzeichnet, daß** der Übergang zwischen der ersten Dämpfungsvorschrift und der zweiten Dämpfungsvorschrift linear stattfindet, d.h. mit einer linearen Variation des genannten Parameters (A) in Abhängigkeit von der Zeit (t) und/oder der Winkelposition (α) des Lenkrads zwischen dem mit der ersten Dämpfungsvorschrift bestimmten Wert (A1) dieses Parameters und dem anderen, mit der zweiten Dämpfungsvorschrift bestimmten Wert (A2) dieses Parameters.

3. Verfahren nach Anspruch 1 oder 2, **dadurch gekennzeichnet,** **daß** die beiden Werte (α1; -α1) der Winkelposition des Lenkrads, zwischen denen die Übergangsvorschrift angewendet wird, den gleichen Absolutwert besitzen, wobei der eine positiv und der andere negativ ist.

4. Verfahren nach einem der Ansprüche 1 bis 3, **dadurch gekennzeichnet,** **daß** die beiden Werte (α1; -α1) der Winkelposition des Lenkrads, zwischen denen die Übergangsvorschrift angewendet wird, in Abhängigkeit von der Drehwinkelgeschwindigkeit (V1) des Lenkrads variieren.

5. Verfahren nach Anspruch 4, **dadurch gekennzeichnet,** **daß** die beiden Werte (α1; -α1) der Winkelposition des Lenkrads, zwischen denen die Übergangsvorschrift angewendet wird, mit ihrem Absolutwert mit der Drehgeschwindigkeit (V1) des Lenkrads zunehmen.

**Claims**

1. Method of controlling the damping function for motor vehicle electrical assisted steering, **characterised in that** it consists of:

   ■ applying a first damping law, for controlling the damping control current (I), defining the parameter (A1) for calculating the intensity of this current as a function of the angular speed of rotation (V1) of the steering wheel, when the steering wheel returns to its "zero" point,

   ■ applying a second damping law, for controlling the damping control current (I), defining the parameter (A2) for calculating the intensity of this current as a function of the angular speed of rotation (V1) of the steering wheel, when the steering wheel moves away from its "zero" point,

   ■ also determining a positive value (∝1) and a negative value (-∝1) of the angular position of the steering wheel, situated on each side of its "zero" point,

   ■ detecting the times (t1; t2) of passage of the steering wheel through the aforementioned two angular position values (∝1; -∝1), and

   ■ for the angular positions (a) of the steering wheel situated between these two values (∝1; -∝1), applying a damping law, still defining the aforementioned parameter (A), which makes a continuous transition between the first damping law and the second damping law.

2. Method according to claim 1, **characterised in that** the transition between the first damping law and the second damping law is made in a linear fashion, that is to say with linear variation of the aforementioned parameter (A), as a function of the time (t) and/or of the angular position (∝) of the steering wheel, between the value (A1) of this parameter determined by the first damping law and the other value (A2) of this parameter determined by the second damping law.

3. Method according to claim 1 or 2, **characterised in that** the two values (∝1; -∝1) of the angular position of the steering wheel, between which the transition law is applied, possess the same absolute value, one being positive and the other negative.

4. Method according to any one of claims 1 to 3, **characterised in that** the two angular values (∝1; -∝1) of the angular position of the steering wheel, between which the transition law is applied, vary as a function of the angular speed of rotation (V1) of the steering wheel.

5. Method according to claim 4, **characterised in that** the two values (∝1; -∝1) of the angular position of the steering wheel, between which the transition law is applied, increase in absolute value with the speed of rotation (V1) of the steering wheel.

FIG 1

A

O → V1

FIG 2

G
%

O → V2

FIG 3

A

A2

A1

O → V1

FIG 4

∝

P1

A1

O → t

A2

P2

FIG 5

FIG 6

Calcul du courant I de commande de l'amortissement

Acquérir la vitesse du volant α', sa position angulaire α et la vitesse du véhicule

Déterminer G en fonction de la vitesse du véhicule

Déterminer A (algorithme 2)

A * G

FIG 7

Calcul du coefficient A en fonction de la vitesse du volant (α'=dα/dt) et de sa position angulaire (α)
Algorithme 2 =

Déterminer α1, A1 et A2 en fonction de α'

$|\alpha| > \alpha1$

NON

OUI

$(\alpha>0$ ET $\alpha'>0)$ OU
$(\alpha<0$ ET $\alpha'<0)$

NON

OUI

A=A2

A=A1

$$A = A1 + \frac{(A2 - A1) \times (\alpha1 - \alpha)}{2 \times \alpha1}$$

EP 1 300 321 B1